# EUROPÄISCHE PATENTSCHRIFT

(11) **EP 2 456 651 B1**
(45) Veröffentlichungstag und Bekanntmachung des Hinweises auf die Patenterteilung: **01.05.2013**
(21) Anmeldenummer: 10728153.7
(22) Anmeldetag: 17.06.2010
(51) Int. Cl.: B61D 37/00, A47B 31/06, B60N 3/00

(54) **VORRICHTUNG ZUR ANBINDUNG EINES TISCHES AN DIE SEITENWAND EINES FAHRZEUGES**
DEVICE FOR CONNECTING A TABLE TO THE SIDE WALL OF A VEHICLE
DISPOSITIF DE FIXATION D'UNE TABLE À LA PAROI LATÉRALE D'UN VÉHICULE

(30) Priorität: 23.07.2009 DE 102009034511
(43) Veröffentlichungstag der Anmeldung: 30.05.2012
(73) Patentinhaber: Siemens Aktiengesellschaft, 80333 München (DE)
(72) Erfinder: SCHMIDT, Gerhard, 45128 Essen (DE)
(74) Vertreter: Wolff, Harry
(86) Internationale Anmeldenummer: PCT/EP2010/058507
(87) Internationale Veröffentlichungsnummer: WO 2011/009679

(56) Entgegenhaltungen:
- EP-A1- 1 195 307
- EP-A1- 1 293 147
- DE-C1- 3 624 156
- DE-U1- 20 104 240
- FR-A1- 2 802 070
- US-A- 5 046 433

## Beschreibung

Die Erfindung betrifft eine Vorrichtung zur Anbindung eines Tisches für quer zur Fahrtrichtung angeordnete Sitzgruppen an die Seitenwand eines Fahrzeugs, insbesondere eines Schienenfahrzeugs, mit einer nahe der Seitenwand unterhalb der Tischplatte angeordneten aufrechten Stützstruktur deren unteres Ende an der Seitenwand und deren oberes Ende an der Tischplatte befestigt ist, wobei die Stützstruktur aus mindestens zwei im Wesentlichen biegesteifen in Längsrichtung des Fahrzeugs im Abstand zueinander aufrecht angeordneten Pfosten besteht, die mit in Längsrichtung der Pfosten voneinander beabstandeten Sollknickstellen mit definierten Knickachsen versehen sind, welche beim Überschreiten einer festgelegten, in Längsrichtung des Fahrzeugs auf die Tischplatte wirkenden Kraft ein Ausweichen des Tisches in Wirkrichtung dieser Kraft ermöglicht.

Eine solche Vorrichtung zur Anbindung eines Tisches ist beispielsweise aus der EP 1 293 147 A1 bekannt. Weiterer Stand der Technik ergibt sich aus der FR 2 802 070 A1 und der DE 201 04 240 U1, die ebenfalls Stützstrukturen für Tische zum Gegenstand haben.

Sitzgruppen aus gegenüberliegenden, quer zur Fahrtrichtung angeordneten Sitzen in Schienenfahrzeugen werden häufig mit dazwischen fest installierten Tischen ausgerüstet. Diese Tische müssen die Beanspruchungen des Betriebs sowie definierten außergewöhnlichen Lasten (z.B. Vandalismus) ohne Beschädigung aushalten.

Bei Kollisionen der Fahrzeuge mit Hindernissen und daraus resultierenden hohen Längsverzögerungen treten durch den Aufprall der Insassen an der Tischkante deutlich höhere Lasten auf. Die Befestigung des Tisches im Fahrzeug soll dabei die Bewegung des Tisches so begrenzen, dass der Überlebensraum der gegenüber, d.h. mit den Rücken zu Fahrtrichtung sitzenden, Insassen nicht beeinträchtigt wird. Andererseits ist eine kontrollierte Nachgiebigkeit der Tischkante vorteilhaft für die Begrenzung der Aufprallkräfte zur Vermeidung oder Reduktion von Verletzungen.

Eine wesentliche Übertragung von Längskräften von der Tischplatte über ein Bein in den Fußboden erscheint aufgrund der großen Versatzmomente und des begrenzten Bauraums für das Bein ungünstig. Zudem existiert häufig die Forderung, die Tische einschließlich Bein zu Reinigungszwecken um eine nahe der Seitenwand liegende Drehachse nach oben schwenken zu können, womit das Bein nur Druckkräfte in vertikaler Richtung übertragen kann.

Problematisch für eine Anbindung eines Tisches an der Seitenwand ist der in Querrichtung große Hebelarm zu dem Aufprallpunkt der Fahrgäste, insbesondere bei Sitzanordnungen mit zwei oder mehr Sitzen nebeneinander. Durch diesen Hebelarm wird eine Seitenwandanbindung überwiegend durch ein Drehmoment um die vertikale Achse belastet. Entsprechend ist bei einer plastischen Überlastung im Fall einer Kollision eine Bewegung in Richtung dieser Belastung zu erwarten, d.h. eine Rotation der Tischplatte um eine vertikale Achse nahe der Seitenwand.

Nachteilig an dieser Bewegungsform ist, dass sie abhängig von der Sitzposition der Fahrgäste und damit dem Querabstand deren Aufprallpunkts von der Drehachse eine stark abweichende Aufprallkraft erzeugt. So hat z.B. in einer Anordnung mit zwei Sitzen nebeneinander die Mitte des gangseitigen Sitzes etwa den dreifachen Abstand von der Seitenwand, wie der fensterseitige. Entsprechend ist für den am Fenster sitzenden Insassen eine dreifach höhere Verformungskraft an der Tischkante zu erwarten, was eine gezielte Auslegung zur Verringerung der Verletzungsgefahr für alle Sitzpositionen praktisch unmöglich macht.

Zur Umgehung dieses Auslegungskonflikts bietet sich an, die Kraft begrenzenden Energieabsorptionselemente direkt dem Aufprallpunkt an der Tischkante vor der jeweiligen Sitzposition zuzuordnen. Das kann durch eine Verformbarkeit des Materials der Tischkante selbst oder durch in oder unter der Tischplatte angeordnete Verschiebemechanismen geschehen, die ein Verschieben des Tisches in Fahrtrichtung ermöglichen. Um aber auch die vertikalen betrieblichen und außergewöhnlichen Lasten aufnehmen zu können, ist für solche Lösungen eine große Bauhöhe erforderlich, die den unter dem Tisch vorhandenen Platz und damit den Komfort der Fahrgäste einschränkt.

Im modernen Fahrzeugbau hat sich aus Gründen der Standardisierung und Flexibilisierung die Verwendung von in Längsrichtung kontinuierlich durchlaufenden Rohbauschnittestellen, z.B. in der Form von C-Schienen zur Befestigung der Innenausbaukomponenten, vorwiegend der Sitze, weit verbreitet. Um die Zahl dieser Rohbauschnittestellen und der dafür erforderlichen Durchbrüche in der Seitenwandverkleidung zu beschränken, hat man in einigen Ausführungen die Seitenwandanbindung der Sitze auch für die Befestigung der Tische genutzt. Da die übliche C-Schiene auf Höhe der Untergestelle der Sitze liegt, also deutlich unterhalb der Tischplatte, erfolgt bei bekannten Lösungen die Anbindungen durch einen unmittelbar an die Seitenwand angrenzenden Pfosten. Die vorstehend im Zusammenhang mit einer direkten Seitenwandanbindung beschriebene Problematik bleibt trotzdem bestehen.

Die Aufgabe der vorliegenden Erfindung besteht, ausgehend von den Problemen und Nachteilen der bekannten Tischbefestigung, in der Schaffung einer Stützstruktur zur Seitenwandanbindung eines Tisches vor einer quer zur Fahrtrichtung angeordnete Sitzgruppe, die mit hoher Stabilität die Verletzungsgefahr der Fahrgäste im Betrieb, insbesondere bei Kollisionen, deutlich vermindert, ohne dass Komforteinbußen hingenommen werden müssen.

Zur Lösung der Aufgabe ist erfindungsgemäß vorgesehen, dass die Sollknickstellen jeweils eine Art Gelenk bilden, deren Knickachsen im Wesentlichen quer zur Fahrtrichtung liegen, wobei die in Richtung Seitenwand und Tischplatte angrenzenden Pfostenbereiche jeweils um die Fahrzeuglängsachse torsionssteif miteinander verbunden sind.

Die erfindungsgemäße Ausbildung der Stützstruktur mit entsprechend gestalteten Pfosten bewirkt im Kollisionsfall, also wenn z.B. ein Fahrgast gegen die Tischkante geschleudert wird, eine Bewegung der Tischplatte auf einer durch die Pfostengestaltung erzwungenen Kreisbahn in Längsrichtung des Fahrzeugs, die für den erwünschten Deformationsweg im Fall einer Kollision genutzt werden kann. Der Pfosten ist jeweils in seinen entsprechend ausgebildeten Endbereichen gelenkig, gleichgültig wie die Sollknickstelle ausgebildet ist. In jedem Fall gestattet sie ein gezieltes Zurückweichen des Tisches in der durch die Knickachse der Sollknickstelle festgelegten Richtung. Die Erfindung lässt sich sehr gut bei der Bauweise eines Fahrzeuges einsetzen, bei der die Schnittstelle für die Befestigung der Pfosten an der Seitenwand wesentlich unterhalb der Tischplatte liegt, vorzugsweise dort, wo die Sitzbefestigung an der C-Schiene erfolgt.

Zwar wäre bei einer plastischer Überlastung eines bekannten vertikalen Pfostens zur Tischbefestigung, der im unteren Bereich der Seitenwand befestigt ist, bei reiner Längsbelastung eine ähnliche Deformation zu erwarten. Da aber, wie oben beschrieben, die Lasten durch die auf die Tischkante treffenden Fahrgäste unter einem erheblichen Hebelarm einwirken, würden die Pfosten überwiegend durch ein Moment um ihre Hochachse belastet. Durch die erfindungsgemäße Anordnung von zwei Pfosten in einem in Längsrichtung möglichst großem Abstand kann dieses Moment in Form eines Kräftepaars in Fahrzeugquerrichtung aufgenommen werden.

Die Sollknickstellen bilden jeweils eine Art Gelenk, deren Knickachsen im Wesentlichen quer zur Fahrtrichtung liegen, wobei die in Richtung Seitenwandbefestigung und Tischplatte angrenzenden Pfostenbereiche jeweils um die Fahrzeuglängsachse torsionssteif miteinander verbunden sind, um die Verdrehung der Pfosten gegeneinander um die Fahrzeuglängsachse zu verhindern. Die Verbindung der Pfosten miteinander kann durch die Seitenwandanbindung (C-Schiene) und/oder die Tischplatte selbst erfolgen. In einer typischen Anordnung eines Tisches in einer Gegenübersitzgruppe ist der Hebelarm der Längslasten wesentlich größer als der halbe Abstand der Pfosten, so dass diese überwiegend in Fahrzeugquerrichtung belastet werden. Um dennoch die erwünschte Längsbewegung der Pfosten gegenüber der Querbewegung zu erzwingen, hat sich die erfindungsgemäße Ausbildung von quasi gelenkigen Bereichen mit stark richtungsabhängigem Biegewiderstand bewährt.

Nach einem weiteren Merkmal der Erfindung wird vorgeschlagen, dass die Pfosten durch mindestens ein zusätzliches, um die Fahrzeuglängsrichtung torsionssteifes und parallel zur Tischplatte verlaufendes Aussteifungselement verbunden sind, dessen Anschlussbereiche an den Pfosten jeweils ebenfalls in der Art eines Gelenkes ausgeführt sind, wobei die dabei gebildeten Gelenkachsen parallel zu den durch die Sollknickstellen definierten Knickachsen verlaufen. Diese Ausführung wird eingesetzt, falls mit den zu verwendenden Materialien und Bauräumen eine belastungsgerechte Auslegung des biegeschlaffen Querschnittes nicht möglich sein sollte. Damit kann die Anzahl der Bereiche, die die Verdrehung der Pfosten gegeneinander behindern, unabhängig von den an den Enden der Pfosten gelegenen Sollknickstellen weiter erhöht werden. Die Gestaltung der der Aussteifung dienenden Elemente erfolgt nach den gleichen Grundsätzen wie die der Gelenkbereiche an den Enden der Pfosten.

Prinzipiell lassen sich die Sollknickstellen durch echte Gelenke mit etwa in Fahrzeugquerrichtung orientierter Drehachse darstellen. Knickachse der Sollknickstelle und Drehachse des Gelenkes sind in diesem Fall synonym. Angesichts der relativ großen auftretenden Lasten erscheinen echte Gelenke zum Auffangen und zum Vernichten von Aufprallenergie für diese Anwendung zu aufwändig. Deshalb wird erfindungsgemäß vorgeschlagen zumindest einzelne, vorzugsweise alle Sollknickstellen als elastische oder plastische Gelenke auszuführen.

Vorzugsweise ist der horizontale Querschnitt eines jeden Pfostens im Bereich der Sollknickstellen so ausgebildet, dass das Widerstandmoment um die Knickachse wesentlich kleiner ist als das Widerstandsmoment um die Normalachse. Das lässt sich besonders günstig erreichen, wenn der horizontale Querschnitt durch den Pfosten im Bereich der Sollknickstelle in Richtung der Knickachse eine flache rechteckige Form mit einer um die Normalachse mittigen Aussparung besitzt. In der praktischen Umsetzung kann das durch ein Blechprofil erreicht werden, das im Gelenkbereich geschlitzt ist.

Für einen wirksamen Schutz der Fahrgäste bei unterschiedlicher Besetzung der Sitze ist es erstrebenswert, die Verformungscharakteristiken der möglichen Aufprallpunkte an der Tischkante voneinander zu entkoppeln. Dies kann näherungsweise erreicht werden, wenn nach einem anderen Merkmal der Erfindung die Knickachsen der Sollknickstellen der Pfosten so gegen die Fahrzeugquerrichtung gedreht sind, dass sie sich exakt oder angenähert auf einer vertikalen Achse schneiden, die in Querrichtung zur Seitenwand näher an der Fahrzeugmitte liegt als ein der Seitenwand benachbarte Fahrgastsitz. Durch eine Schrägstellung der Knickachsen gegen die Fahrzeugquerrichtung beschreibt die Tischplatte bei Rotation der Pfosten um die Knick- bzw. Gelenkachse ninfolge einer auf die Tischkante einwirkenden Kraft eine Rotation um diese vertikale Achse. Der Aufprallpunkt des gangseitig sitzenden Insassen erfährt somit keine Längsbewegung, ist also von der Bewegung um die Knickachsen entkoppelt. Eine Deformation dieses Aufprallpunktes erfordert eine Biegung der gelenkigen Bereiche oder sonstige inhärent vorhandene Nachgiebigkeiten.

Da die vertikalen Achse (die ideelle Drehachse) weit von dem Aufprallpunkt des seitenwandseitig sitzenden Insassen entfernt ist kann eine Krafteinwirkung dort eine Biegung der Sollknickstelle um die Knickachsen bewirken, während dabei die Belastung um die Normalachsen aufgrund des kurzen Hebelarms gering ist.

Falls, z.B. zu Reinigungszwecken die Möglichkeit zum Hochschwenken der Tischplatte erwünscht ist, können in einer Ausgestaltung der Erfindung die Pfosten durch parallel zur Fahrzeuglängsachse bewegliche Gelenke (11) unterteilt sein.

Die Erfindung löst somit ihre Aufgabe durch eine Seitenwandanbindung der Tischplatte mit ausgeprägt richtungsabhängiger Verformungscharakteristik. Das Verletzungsrisiko der Fahrgäste wird gegenüber früheren Lösungen deutlich vermindert, wobei die besonders vorteilhafte Anbindung des Tisches an die Schnittstelle der Fahrzeugsitze beibehalten werden kann.

Ein Ausführungsbeispiel der Erfindung ist in der Zeichnung dargestellt und wird nachfolgend beschrieben. Es zeigt:
- Fig. 1: einen Längsschnitt durch einen Fahrzeugtisch mit Seitenwandanbindung im Bereich der Pfosten,
- Fig. 2: eine Prinzipdarstellung der Verformung der Stützstruktur die Pfosten,
- Fig. 3: einen horizontaler Schnitt A-A aus Figur 1 durch die Pfosten,
- Fig. 4: ein Element zur zusätzlichen Aussteifungen der Pfosten,
- Fig. 5: die Anordnung eines Schwenkgelenks zum Anheben des Tisches.

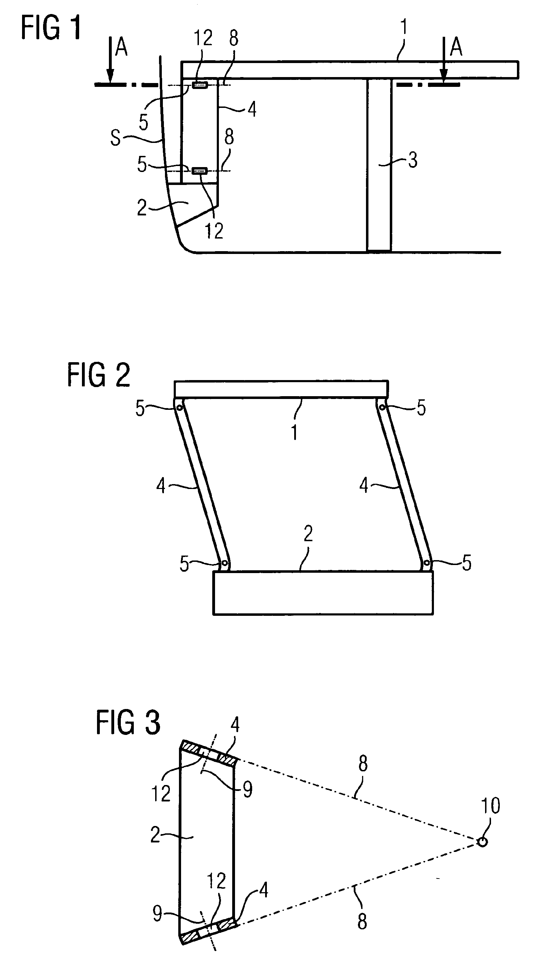

In Figur 1 ist mit 1 die Tischplatte bezeichnet, die in einem Schienenfahrzeug an dessen Seitenwand S zwischen zwei (nicht dargestellten) gegenüberliegenden Sitzreihen befestigt ist. Die Seitenwandschnittstelle ist nur symbolhaft dargestellt und mit 2 bezeichnet; an dieser Stelle sind die beiden senkrechten, im Wesentlichen biegesteifen Pfosten 4 an ihren unteren Enden befestigt; deren obere Enden sind fest mit der Tischplatte 1 verbunden. Von der Seitenwand S in Richtung Fahrzeugmitte (in der Zeichnung nach rechts) beabstandet, ist ein senkrechtes Tischbein 3 vorgesehen, das am oberen Ende an der Unterseite der Tischplatte 1 befestigt ist und unten lose auf dem Boden aufsteht. In der Zeichnungsfigur 1 ist nur einer der beiden Pfosten 4 zu erkennen, da der zweite Pfosten 4 sich in Fahrzeuglängsrichtung (senkrecht zur Zeichnungsebene) hinter dem ersten Pfosten 4 in einem nur unwesentlich kleineren Abstand als die Breite der Tischplatte 1 befindet. Auch der zweite Pfosten 4 ist endseitig mit der Seitenwandschnittstelle 2 einerseits und der Unterseite der Tischplatte 1 andererseits starr verbunden. Beide Pfosten 4 weisen jeweils in ihren Endbereichen, die der Tischplatte 1 bzw. der Schnittstelle 2 der Seitenwand S benachbart sind, Abschnitte auf, in denen das Widerstandsmoment oder die Biegefestigkeit der Pfosten 4 quer zu ihrer Längsachse und in Fahrzeuglängsrichtung so vermindert ist, dass sich an diesen Stellen Sollknickstellen 5 in der Art eines unechten Gelenkes ausbilden. An diesen Stellen können die Pfosten 4 quasi um Gelenkachsen oder Knickachsen 8 "abknicken". Jeder Pfosten 4 besitzt zwei dieser Gelenkachsen 8, nämlich jeweils nahe der Platte des Tisches und nahe der Schnittstelle 2 zur Seitenwand S. Die jeweils oberhalb und unterhalb der Knickachsen 8 liegenden Bereiche der Pfosten 4 sind torsionssteif mit der Tischplatte bzw. der Schnittstelle der Seitenwand verbunden.

Wenn die Pfosten 4 parallel zueinander ausgerichtet sind und die Knickachsen beider Pfosten im wesentlichen parallel zueinander und quer zur Fahrzeuglängsachse verlaufen, verschiebt sich bei einer Krafteinwirkung auf die Tischkante das aus Schnittstellen 2 zur Seitenwand, Tisch 1 und Pfosten 4 gebildete Gelenkviereck zu einem Parallelogramm, wie dies in Figur 2 schematisch dargestellt ist. Dabei bewegt sich die Tischplatte auf einer Kreisbahn in Richtung der Längsachse des Fahrzeuges und gibt den Kräften nach, die auf die Kante des Tisches 1 wirken.

Die Sollknickstelle 5 der Pfosten 4 kann dadurch gebildet werden, dass der Querschnitt des Pfostens 4, wie in Figur 3 bei 12 schematisch angedeutet, eine Ausnehmung aufweist, die den verbleibenden Pfostenquerschnitt vermindert und dadurch das Widerstandsmoment in diesem Bereich verringert. An dieser Stelle kann die Auslenkung in der Sollknickstelle um die Knickachse elastisch oder plastisch erfolgen, je nach gewähltem Material und der Größe der wirkenden Kräfte.

In Figur 3, bei der es sich um einen Schnitt entlang der Schnittlinie A-A in Figur 1 handelt, ist erkennbar, dass im Ausführungsbeispiel die Pfosten 4 leicht schräg gestellt sind, so dass sich die verlängerten Knickachsen 8 in einem Punkt auf einer gedachten Senkrechten 10 zum Boden und zum Tisch schneiden. Bei einer Rotation der Pfosten 4 um die Knickachsen 8 im Bereich der Sollknickstellen 5 beschreibt der Tisch 1 mit seiner Platte dadurch gleichzeitig eine Rotation um die Senkrechte 10. Der Aufprallpunkt des gangseitig (in der Zeichnung rechts) sitzenden Insassen erfährt keine Längsbewegung in Fahrzeuglängsrichtung; der Aufprallpunkt ist von der Bewegung um die Knickachse entkoppelt.

Eine Deformation des Aufprallpunktes des gangseitig sitzenden Insassen erfordert eine Biegung der Sollknickstellen 5 um die Normalachse 9 oder sonstige vorhandene Nachgiebigkeiten. Da die ideelle Drehachse (Senkrechte 10) weit von dem Aufprallpunkt des wandseitig sitzenden Insassen entfernt ist, kann eine Krafteinwirkung dort eine Biegung der Sollknickstellen 5 um die Knickachse 8 bewirken, während dabei die Belastung um die Normalachse 9 aufgrund des kurzen Hebelarms gering ist.

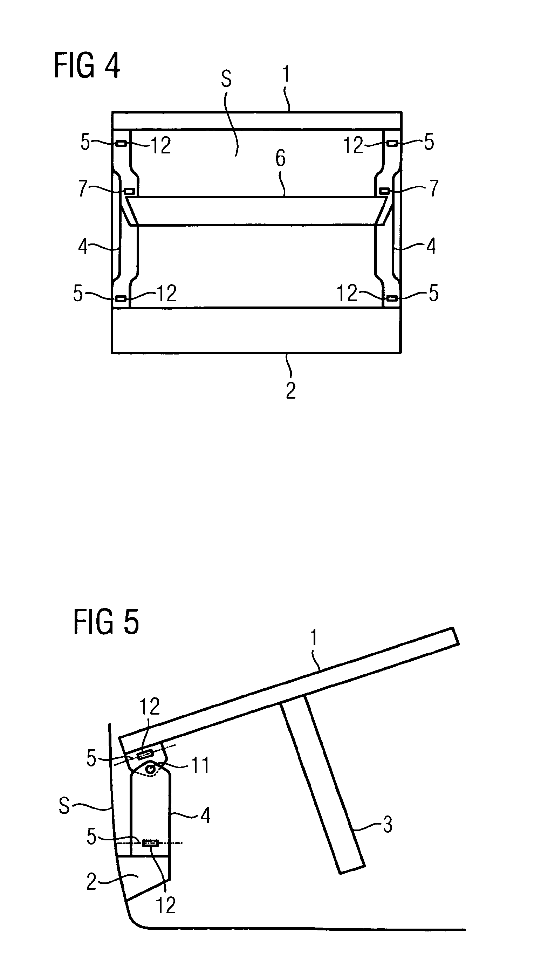

Figur 4 stellt einen Blick auf den Tisch 1 in Blickrichtung zur Seitenwand S dar; erkennbar sind die Pfosten 4, die im Abstand zueinander am Tisch 1 und an der Schnittstelle 2 der Seitenwand S aufrecht stehend befestigt sind; des weiteren sind die durch Materialausnehmungen geschaffenen Sollknickstellen 5 in den Pfosten 4 erkennbar, in denen sich die Stützstruktur parallelogrammartig verformen kann. Zusätzlich ist ein Aussteifungselement 6 erkennbar, das der Stabilisierung des Systems dient und das seinerseits beidendig - quasi gelenkig - bei 7 mit den Pfosten 4 verbunden ist. Die Gestaltung der Gelenkbereiche 7 des Aussteifungselements 6 erfolgt nach den gleichen Grundsätzen wie die der Sollknickstellen 5 in den Endbereichen der Pfosten 4.

Figur 5 zeigt noch einmal den Tisch 1 in der Blickrichtung der Figur 1, hier jedoch in einer zu Reinigungszwecken nach oben geschwenkten Stellung, bei der das Tischbein 3 vom Boden abgehoben ist. Um das Hochschwenken zu ermöglichen, ist ein echtes Gelenk 11 in den Pfosten vorgesehen, dessen Achse parallel zur Fahrzeuglängsachse verläuft und dadurch die Verschwenkung des Tisches ermöglicht.

## Patentansprüche

1. Vorrichtung zur Anbindung eines Tisches für quer zur Fahrtrichtung angeordnete Sitzgruppen an die Seitenwand eines Fahrzeugs, mit einer nahe der Seitenwand unterhalb der Tischplatte angeordneten aufrechten Stützstruktur deren unteres Ende an der Seitenwand befestigbar und deren oberes Ende an der Tischplatte befestigbar ist, wobei die Stützstruktur aus mindestens zwei im Wesentlichen biegesteifen in Längsrichtung des Fahrzeuges im Abstand zueinander aufrecht angeordneten Pfosten (4) besteht, die mit in Längsrichtung der Pfosten (4) voneinander beabstandeten Sollknickstellen mit definierten Knickachsen (8) versehen sind, welche beim Überschreiten einer festgelegten, in Längsrichtung des Fahrzeuges auf die Tischplatte (1) wirkenden Kraft ein Ausweichen des Tisches in Wirkrichtung dieser Kraft ermöglicht,
**dadurch gekennzeichnet,**
**dass** die Sollknickstellen (5) jeweils eine Art Gelenk bilden, deren Knickachsen (8) im Wesentlichen quer zur Fahrtrichtung liegen, wobei die in Richtung Seitenwand (2) und Tischplatte (1) angrenzenden Pfostenbereiche jeweils um die Fahrzeuglängsachse torsionssteif miteinander verbunden sind.

2. Vorrichtung nach Anspruch 1,
**dadurch gekennzeichnet, dass** die Sollknickstellen (5) jeweils in den Bereichen der beiden der Tischplatte (1) und der Seitenwandbefestigung (2) benachbarten Enden der Pfosten (4) vorgesehen sind.

3. Vorrichtung nach Anspruch 1 bis 2,
**dadurch gekennzeichnet, dass**
die Pfosten (4) durch mindestens ein zusätzliches, um die Fahrzeuglängsrichtung torsionssteifes und parallel zur Tischplatte (1) verlaufendes Aussteifungselement (6) verbunden sind, dessen Anschlussbereiche (7) an den Pfosten (4) jeweils ebenfalls in der Art eines Gelenkes ausgeführt sind, wobei die dabei gebildeten Gelenkachsen parallel zu den durch die Sollknickstellen definierten Knickachsen (8) verlaufen.

4. Vorrichtung nach einem der Ansprüche 1 bis 3,
**dadurch gekennzeichnet, dass**
zumindest einzelne Sollknickstellen (5) als elastische oder plastische Gelenke ausgeführt sind.

5. Vorrichtung nach Anspruch 1 bis 4,
**dadurch gekennzeichnet, dass**
der horizontale Querschnitt eines jeden Pfostens (4) im Bereich der Sollknickstellen (5) so ausgebildet ist, dass jeweils das Widerstandmoment um die Knickachse (8) wesentlich kleiner ist als das Widerstandsmoment um die Normalachse (9).

6. Vorrichtung nach Anspruch 5,
**dadurch gekennzeichnet, dass**
der horizontale Querschnitt durch den Pfosten (4) im Bereich der Sollknickstelle (5) in Richtung der Knickachse (8) eine flache rechteckige Form mit einer um die Normalachse (9) mittigen Aussparung (12) besitzt.

7. Vorrichtung nach einem der Ansprüche 1 bis 6,
**dadurch gekennzeichnet, dass**
die Knickachsen (8) der Sollknickstellen (5) der Pfosten (4) so gegen die Fahrzeugquerrichtung gedreht sind, dass sie sich exakt oder angenähert auf einer vertikalen Achse (10) schneiden, die in Querrichtung zur Seitenwand (S) näher an der Fahrzeugmitte liegt als ein der Seitenwand (S) benachbarte Fahrgastsitz.

8. Vorrichtung nach einem der Ansprüche 1 bis 7,
**dadurch gekennzeichnet, dass**
die Pfosten (4) durch ein parallel zur Fahrzeuglängsachse bewegliche Gelenke (11) unterteilt sind.

## Claims

1. Device for connecting a table for groups of seats arranged transversely with respect to the direction of travel to the side wall of a vehicle having an upright supporting structure which is disposed in the vicinity of the side wall below the table top and whose lower end can be fastened to the side wall and whose upper end can be fastened to the table top, wherein the supporting structure comprises at least two substantially flexurally rigid posts (4) which are arranged upright at a mutually spaced disposition in the longitudinal direction of the vehicle and are provided with predetermined buckling points which are spaced apart from one another in the longitudinal direction of the posts (4) and have defined buckling axes (8) which, when a defined force acting on the table top (1) in the longitudinal direction of the vehicle is exceeded, permit a yielding of the table in the direction of said force,
**characterized in that** the predetermined buckling points (5) are each formed in the manner of a joint whose buckling axes (8) lie substantially transverse to the direction of travel, wherein the adjacent post regions in the direction of the side wall (2) and table top (1) are mutually connected in each case in a torsion-rigid manner about the longitudinal axis of the vehicle.

2. Device according to Claim 1,
**characterized in that** the predetermined buckling points (5) are provided respectively in the regions of both ends of the posts (4) adjacent to the table top (1) and to the side wall connection site (2).

3. Device according to Claim 1 to 2,
**characterized in that**
the posts (4) are connected by at least one additional bracing element (6) which is torsionally rigid in the longitudinal direction of the vehicle and extends parallel to the table top (1), the connection regions (7) of said bracing element being formed on the posts (4) in each case likewise in the manner of a joint, wherein the thus formed joint axes extend in parallel with the buckling axes (8) defined by the predetermined buckling points.

4. Device according to any one of Claims 1 to 3,
**characterized in that**
at least individual predetermined buckling points (5) are formed as elastic or plastic joints.

5. Device according to Claim 1 to 4,
**characterized in that**
the horizontal cross-section of each post (4) is formed in the region of the predetermined buckling points (5) in such a manner that the resisting torque about the buckling axis (8) is substantially smaller than the resisting torque about the vertical axis (9).

6. Device according to Claim 5,
**characterized in that**
the horizontal cross-section through the posts (4) in the region of the predetermined buckling point (5) comprises in the direction of the buckling axis (8) a flat, rectangular shape with a central cut-out (12) about the vertical axis (9).

7. Device according to any one of Claims 1 to 6,
**characterized in that**
the buckling axes (8) of the predetermined buckling points (5) of the posts (4) are rotated opposite to the vehicle transverse direction, such that they intersect precisely or approximately on a vertical axis (10) which in the transverse direction with respect to the side wall (S) lies closer to the vehicle middle than a passenger seat which is adjacent to the side wall (S).

8. Device according to any one of Claims 1 to 7,
**characterized in that**
the posts (4) are subdivided by joints (11) which move in parallel with the vehicle longitudinal axis.

## Revendications

1. Dispositif de fixation à la paroi latérale d'un véhicule d'une table pour des groupes de sièges disposés transversalement à la direction de déplacement, comprenant une structure d'appui dressée, qui est disposée près de la paroi latérale en dessous du plateau de la table et dont l'extrémité inférieure peut être fixée à la paroi latérale et dont l'extrémité supérieure peut être fixée au plateau de la table, la structure d'appui étant constituée d'au moins deux jambages ( 4 ) sensiblement rigides en flexion, dressés à distance l'un de l'autre dans la direction longitudinale du véhicule, et pourvus de points destinés à se plier, à distance les uns des autres dans la direction longitudinale des jambages ( 4 ), et ayant des axes ( 8 ) de pliage définis, points qui, lorsqu'une force fixée agissant dans la direction longitudinale du véhicule sur le plateau ( 1 ) de la table est dépassée, rendent possible un effacement de la table dans la direction d'application de cette force,
**caractérisé**
**en ce que** les points ( 5 ) destinés à se plier forment respectivement une sorte d'articulation, dont les axes ( 3 ) de pliage sont sensiblement transversaux à la direction de déplacement, les zones des jambages, voisines dans la direction de la paroi ( 2 ) latérale et du plateau ( 1 ) de la table, étant reliées entre elles respectivement d'une manière rigide à la torsion autour de l'axe longitudinal du véhicule.

2. Dispositif suivant la revendication 1,
**caractérisé en ce que** les points ( 5 ) destinés à se plier sont prévus respectivement dans les zones des deux extrémités des jambages ( 4 ) voisines du plateau ( 1 ) de la table et de la fixation ( 2 ) à la paroi latérale.

3. Dispositif suivant la revendication 1 à 2,
**caractérisé en ce que**
les jambages ( 4 ) sont reliés par au moins un élément ( 6 ) de raidissement rigide à la torsion, dans la direction longitudinale du véhicule, s'étendant parallèlement au plateau ( 1 ) de la table et dont les zones ( 7 ) de raccordement aux jambages ( 4 ) sont réalisées respectivement également à la manière d'une articulation, les axes des articulations ainsi formées s'étendant parallèlement aux axes ( 8 ) de pliage définis par les points destinés à se plier.

4. Dispositif suivant l'une des revendications 1 à 3,
**caractérisé en ce que**
au moins certains points ( 5 ) destinés à se plier sont réalisés sous la forme d'articulations élastiques ou plastiques.

5. Dispositif suivant la revendication 1 à 4,
**caractérisé en ce que**
la section transversale horizontale de chaque jambage ( 4 ) est constituée dans la zone des points ( 5 ) destinés à se plier, de manière à ce que respectivement le couple résistant autour de l'axe ( 8 ) de pliage soit sensiblement plus petit que le couple résistant autour de l'axe ( 9 ) normal.

6. Dispositif suivant la revendication 6,
**caractérisé en ce que**
la section transversale horizontale des jambages ( 4 ) a, dans la zone du point ( 5 ) destiné à se plier, dans la direction de l'axe ( 8 ) de pliage, une forme rectangulaire plane ayant un évidement ( 12 ) au milieu autour de l'axe ( 9 ) normal.

7. Dispositif suivant l'une des revendications 1 à 6,
**caractérisé en ce que**
les axes ( 8 ) de pliage des points ( 5 ) destinés à se plier des jambages ( 4 ) sont tournés par rapport à la direction transversale du véhicule, de manière à se couper exactement ou à peu près sur un axe ( 10 ) vertical, qui se trouve, dans la direction transversale par rapport à la paroi ( S ) latérale, plus près du milieu du véhicule que d'un siège de passager voisin de la paroi ( S ) latérale.

8. Dispositif suivant l'une des revendications 1 à 6,
**caractérisé en ce que**
les jambages ( 4 ) sont subdivisés par une articulation ( 11 ) mobile parallèlement à l'axe longitudinal du véhicule.
